# EUROPEAN PATENT APPLICATION

(11) **EP 1 079 256 A1**
(43) Date of publication of application: **28.02.2001**
(21) Application number: 99306729.7
(22) Date of filing: 24.08.1999
(51) Int. Cl.: G02C 5/22

(54) **Double action titanium spring hinge for eyewear and sunglasses**

(71) Applicant: Raymond Chu Optical Company Limited, Tsuen Wan, N.T. (HK)
(72) Inventor: Chu, Kai Cheung, Fo Tan, Shatin, N.T. (HK)
(74) Representative: Powell, Timothy John

(57) **Abstract**

Titanium eyeglasses 20 with double-action spring hinges 24,25 have antifriction alloy pads 28 to inhibit grinding of titanium surfaces at the hinges.

## Description

The present invention relates to eyeglasses, and particularly to eyeglasses having a "double-action" spring feature.

Typically, spectacle frames are mainly made from "nickel-silver", or a nickel-containing alloy, or stainless steel. In the past, attempts have been made to use titanium for frames, thereby to reduce the weight of the frame, as titanium is only one third of the weight of nickel-silver. In addition, titanium is durable and anti-corrosive (especially in respect of, for example, human sweat, amino acids and salts). Also titanium has anti-oxidizability i.e. its properties are not changed, and it will not be tarnished, by oxidation; also it is a non-allergic material. Therefore, it is a very stable material for wearing and for directly contacting with skin. Titanium is environmentally-friendly and is a very stable material, so that it will not be dissolved by carbonic acid and it does not release any harmful substances.

However, titanium has a property which has inhibited previously use of it in "double-action" spring spectacle frames, namely that it is highly susceptible to grinding or abrasive action. Thus, if a surface of titanium material is ground or wears against another surface of titanium, the titanium surface(s) is/are eroded; furthermore, when this occurs, the titanium surface(s) become porous in the regions which have been worn down. Therefore, eyeglasses with titanium frames having a "double-action" spring feature are not available now.

The present invention provides eyeglasses having a frame and side arms hinged to the frame characterised in that the frame and side arms are of titanium, in that the hinge arrangement between the frame and side arm comprises two hinge members pivotable relative to one another under action of a spring arrangement to urge the members together, and that a pad member is located at an edge , or surface, of abutting of one of said hinge members with the other said hinge member.

The eyeglasses may include any one or more of the features of dependent Claims 2 to 11.

The present invention also provides a pad member for eyeglasses as claimed.

Thus, the present invention enables eyeglasses to be made of titanium material; in this way, the present invention may provide eyeglasses with the advantages resultant from the use of titanium over prior art arrangements, and particularly having the "double-action" spring feature.

The present invention is applicable to all forms of eyewear, including those with prescription lenses and/or darkened lenses, and including sunglasses and eyewear for safety protection.

In order that the invention may more readily be understood, a description is now given, by way of example only, reference being made to the accompanying drawings in which:-
Figure 1 is a plan view of conventional eyeglasses;
Figure 2 shows a hinge action of the eyeglasses of Figure 1;
Figure 3 shows relative positions of hinge portions of the eyeglasses of Figure 1;
Figure 4 is a plan view of eyeglasses embodying the present invention;
Figure 5 shows relative positions of the hinge portions of the eyeglasses of Figure 4;
Figure 6 is a partial cross-section of the eyeglasses of Figure 4;
Figure 7 shows the stable positions of the eyeglasses of Figure 4;
Figure 8 shows part of an alternative embodiment of the present invention;
Figure 9 shows part of an alternative embodiment of the present invention; and
Figure 10 shows an alternative position for the pad.

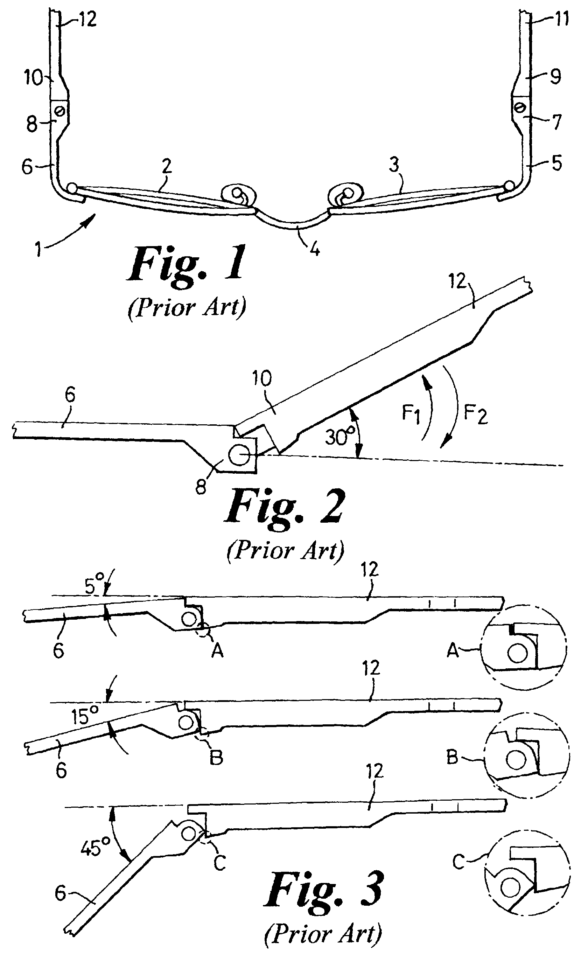

Eyeglasses generally referenced as 1 in Figure 1 have lenses 2, 3 held in a nickel-silver main section 4 and two nickel-silver side sections 5, 6 which are perpendicular to main section 4. Each side section 5, 6 ends in a hinge portion 7, 8 respectively engaging with a hinge portion 9, 10 of side arm (or temple arm) 11, 12 which extend along the respective sides of the head of a wearer. In Figure 1, side arms 11, 12 are in their position for wearing, with hinge portions 7 and 9 extending in the same direction, likewise hinge portions 8 and 10.

Eyeglasses 1 are of the type known as "double-action" spring whereby the hinge arrangement provides two stable states for the elements of each hinge; in one stable state, hinge portions 8 and 10 extend in the same direction, as shown by Figure 1, this being the state in which eyeglasses 1 are worn by a person. In the other stable state, hinge portions 8 and 10 extend perpendicular to one another (likewise hinge portions 7 and 9), this being the state in which eyeglasses 1 are folded suitable for storage.

In order to achieve the "double-action" hinge arrangement, each side arm 11, 12 has an internal spring (not shown) acting:-
i) when the side arm is forced outwardly from the wearing position (Figure 1), to return the side arm to that position;
ii) when the side arm is urged inwardly from the wearing position beyond a threshold position shown in Figure 3C, to move the side arm to the folded position.
Action (i) is shown in Figure 2 extending to 30° beyond the aligned position, with F₁ denoting the initial force and F₂ denoting the return force. Action (ii) is shown in Figure 3.

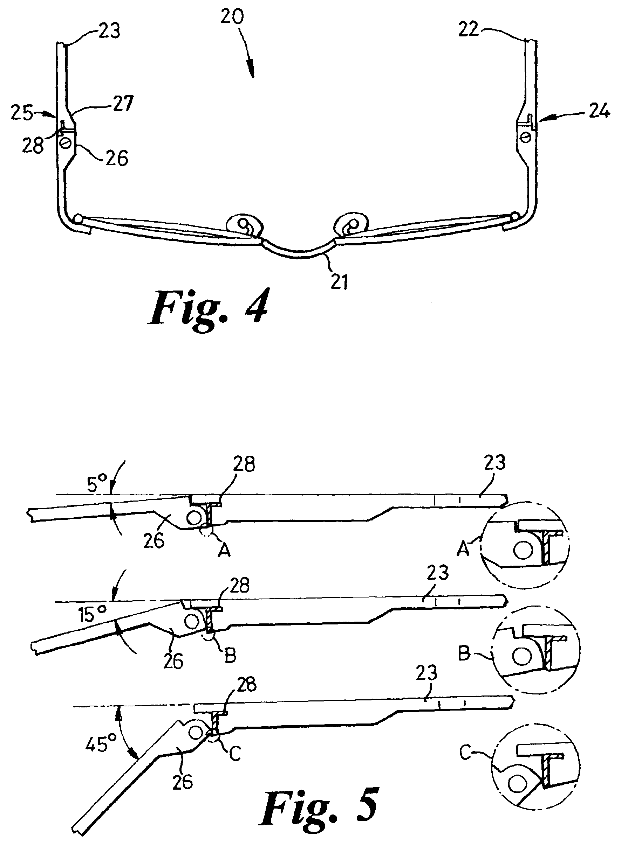

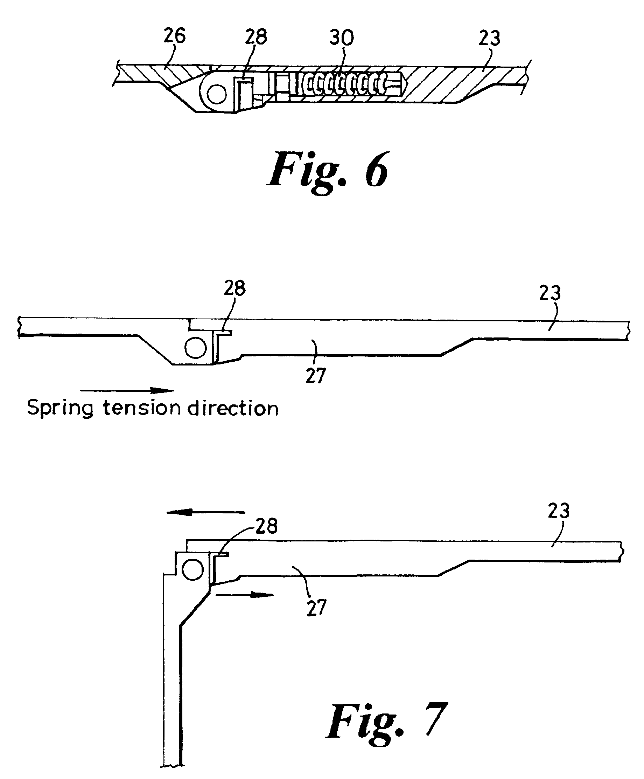

Eyeglasses 20 of the present invention are shown in Figure 4; eyeglasses 20 have a titanium main section 21 and titanium side arms 22, 23 and each hinge arrangement 24, 25 has hinge portions 26, 27 in similar fashion to before, except that there is now a L-shaped pad 28 of uniform thickness in the range 0.1 to 1.2 mm, preferably 0.8 to 1.2, mm of an anti-friction alloy prepared with Al 3.5 - 6.0 wt%, Mn 7.0 - 11.0 wt%, Zn 4.0 - 6.0 wt%, Fe 1.0 - 3.0 wt% and Si 0.1 - 0.7 wt%; the alloy has a hardness of HRC = 45 - 55. Pad 28 is secured on surface 29 of hinge portion 27 by tight-fitting, not shown (alternatively by any other appropriate means e.g. adhesive or a screw). As can be seen from Figure 6, movement of hinge arrangement 24 or 25 from one stable position to the other is readily achieved with substantially reduced grinding and eroding action of surfaces of hinge arrangements 24 or 25.

Thus, titanium surfaces are not directly ground against each other, but instead a titanium surface contacts only pad 28 so that little or no grinding occurs. Therefore, there is no eroding between, or of, titanium surfaces.

Figure 6 is a part cross-sectional view of side arm 23 when in the wearing position showing spring 30.

Figure 7 shows plate 28 as positioned in the two stable states of hinge arrangement 25.

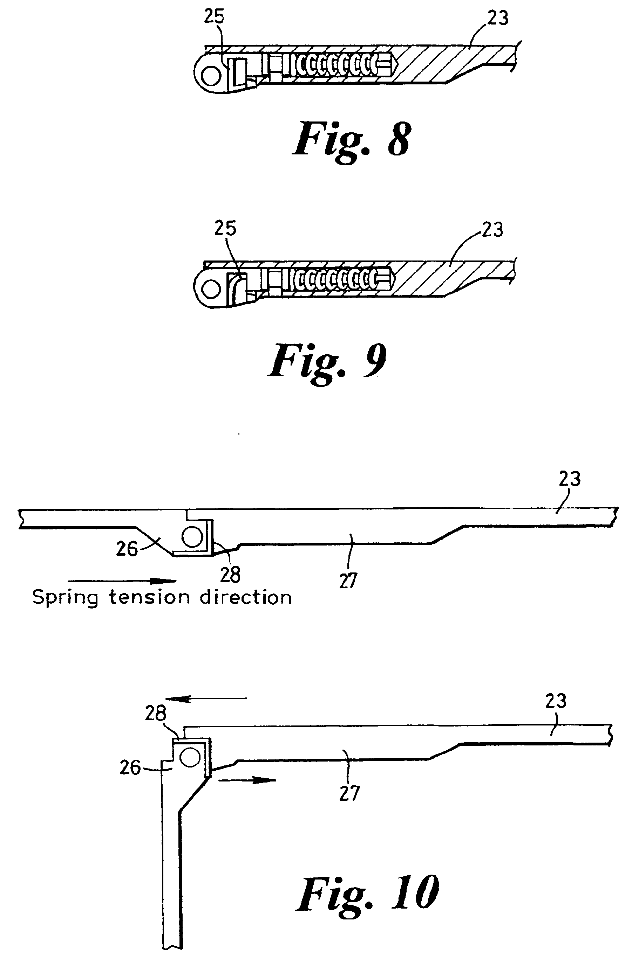

In a variant shown in Figure 8, pad 28 is configured such that the two sections of the L-shape are inclined at an angle less than 90° to one another; in another variant shown in Figure 9, pad 28 has an arcuate form Pad 28 can be inserted into the space between side arm 23 and hinge portion 26 and fixed there by tight-fitting, whereas the construction shown in Figures 8 and 9 must be fixed by a screw or adhesive or an alternative arrangement.

Further variants include:-
- pad 28 is made of another anti-friction material, for example, a copper-beryllium alloy, or a stainless steel 303 material, or a nickel-silver, or other material with suitable characteristics;
- the thickness of pad 28 is in the range 0.1 to 1.2mm;
- pad 28 is located on the surface(s) of hinge portion 26 (see Figure 10);
- pad 28 is located at, or in the vicinity of, the edge of hinge portion 26 which passes over the surface of hinge portion 27;
- pad 28 is provided on each of surfaces of hinge portions 26,27 which face each other in one or both of the stable positions (see Figure 7), or on each of the edge of hinge portion 26 and the surface of hinge portion 27.

## Claims

1. Eyeglasses having a frame (21) and side arms (23,23) hinged to the frame characterised in that the frame and side arms are of titanium, that the hinge arrangement (24,25) between the frame and side arm comprises two hinge members (26,27) pivotable relative to one another under action of a spring arrangement to urge the members together, and that a pad member (28) is located at an edge, or surface, of abutting of one of said hinge members with the other said hinge member.

2. Eyeglasses according to Claim 1 wherein the pad member comprises an anti-friction alloy.

3. Eyeglasses according to Claim 1 or 2 characterised in that the pad member (28) comprises 3.5 to 6.0 wt% aluminium.

4. Eyeglasses according to any preceding Claim characterised in that the pad member (28) comprises 7.0 to 11.0 wt% magnesium.

5. Eyeglasses according to any preceding Claim characterised in that the pad member (28) comprises 4.0 to 6.0 wt% zinc.

6. Eyeglasses according to any preceding Claim characterised in that the pad member (28) comprises 1.0 to 3.0 wt% iron.

7. Eyeglasses according to any preceding Claim characterised in that the pad member (28) is L-shaped.

8. Eyeglasses according to any preceding Claim characterised in that the pad member (28) is L-shaped with the two sections forming the L-shape being at an angle of less than 90° relative to one another.

9. Eyeglasses according to any preceding Claim characterised in that the pad member (28) is in an arcuate shape.

10. Eyeglasses according to any preceding Claim characterised in that the pad member (28) extends along a major portion of an abutment surface of a hinge member.

11. Eyeglasses according to any preceding Claim wherein the pad member (28) is located on the hinge member (27) of a side arm of the eyeglasses(20).

12. A pad member (28) for eyeglasses (20) according to any of Claims 1 to 11.
